**Europäisches Patentamt**

**European Patent Office**

**Office européen des brevets**

(11) Veröffentlichungsnummer: **0 294 671**
**A2**

## (12) EUROPÄISCHE PATENTANMELDUNG

(21) Anmeldenummer: 88108550.0

(22) Anmeldetag: 28.05.88

(51) Int. Cl.⁴: **B65D 1/12**

(30) Priorität: 06.06.87 DE 3719026

(43) Veröffentlichungstag der Anmeldung:
**14.12.88 Patentblatt 88/50**

(84) Benannte Vertragsstaaten:
**AT BE CH DE ES FR GB GR IT LI LU NL SE**

(71) Anmelder: **Riewer, Hans Theo**
**Saarstrasse 54**
**D-5520 Bitburg(DE)**

(72) Erfinder: **Riewer, Hans Theo**
**Saarstrasse 54**
**D-5520 Bitburg(DE)**

(74) Vertreter: **Richter, Bernhard, Dipl.-Ing.**
**Beethovenstrasse 10**
**D-8500 Nürnberg 20(DE)**

(54) **Wasserkanister und zugehöriger Behälter.**

(57) Die Erfindung geht aus von einem Wasserkanister (1) und zugehöriger Behälter (2) zum Einsatz bzw. Verwendung beim Camping und dergleichen, insbesondere bei Mitverwendung eines Kraftwagens, wobei der Wasserkanister einen Handgriff (3) und einen absperrbaren Wasserauslaß (11) und eine Ausnehmung (26) für den lösbar darin einsetzbaren und haltbaren Behälter (2) besitzt. Um bei geringen Herstellungskosten eine kompakte und stabile Formgebung der Anordnung zu erreichen ist vorgesehen, daß zur Schaffung der Ausnehmung (26) der Wasserkanister (1) über seine gesamte Tiefe (t) unterhalb seines oberen Bereiches (1′) in seiner Breite (b) reduziert (b′) ist, wobei diese Reduzierung der Breite sich bis hinunter zum Boden (6) des Kanisters erstreckt, so daß der obere Bereich (1′) und der verbleibende untere Bereich (1″) des Wasserkanisters miteinander einen Winkel oder ein "L" bilden. Ferner ist ein mittels eines Deckels oder dergleichen abschließbarer Behälter (2) der Art vorgesehen, daß er in die vorgenannte Ausnehmung einsetzbar ist.

Fig. 1

## "Wasserkanister und zugehöriger Behälter"

Die Erfindung betrifft einen Wasserkanister gemäß dem Oberbegriff des Anspruches 1. Ein solcher Kanister ist aus DE-GM 18 66 664 bekannt. Dabei ist in einer der Seitenwände des Kanisters eine kreisförmige Vertiefung vorgesehen, welche die Funktion eines Aufnahmeraumes für eine Wasch-Schüssel hat, die mittels einer Klemmeinrichtung, beispielsweise Längsrippen, im Aufnahmeraum gehalten werden kann. Falls der Durchmesser der Wasch-Schüssel kleiner als der Innendurchmesser des Aufnahmeraumes gewählt wird, können in dem verbleibenden Raum Waschutensilien untergebracht werden. Diese Anordnung ist in mehrfacher Hinsicht nachteilig. Zum einen offenbart sie nur die Unterbringung einer Wasch-Schüssel und gegebenenfalls Waschutensilien, ist also auf diesen Einsatzzweck beschränkt. Der mit Wasser gefüllte Kanisterraum bildet teilweise einen zylindrischen Ringraum um die vorgenannte Vertiefung herum. Dies bedingt bei der Herstellung des Kanisters einen erhöhten Aufwand sowohl an Werkzeugformkosten als auch an zu verarbeitendem Material (in der Regel Blech oder Kunststoff). Soll der Wasserkanister eine bestimmte Größe nicht überschreiten, so führt dies zu einer u.U. unerwünschten Kleinheit der Ausnehmung und damit des darin unterbringbaren Behältnisses.

Eine ähnliche Ausbildung eines Behälters für getrennt voneinander zu verpackende Füllgüter ist DE-GM 19 73 937 zu entnehmen. Sie beschreibt einen Kanister (größeren Behälter) mit einer runden oder quadratischen Ausnehmung, in die ein kleinerer Behälter einsetzbar und gegebenenfalls haltbar ist. Der Kanister ist mit einem Traggriff und mit einem Ausguß versehen. Der Kanister, die Ausnehmung und der kleinere Behälter sind in der Draufsicht kreisrund, wobei die Ausnehmung von der oberen, dam Handgriff zugewandten Stirnseite des Kanisters her sich in Richtung zum Kanisterboden hin erstreckt. Wenn auch hier als Behältnis nicht nur eine Wasch-Schüssel, sondern ein Behälter allgemein offenbart ist, so sind doch im übrigen die gleichen Nachteile vorhanden, wie vorstehend zu DE-GM 18 66 664 geschildert.

Erwähnt sei, daß aus DE-PS 805 125 und DE-GM 18 50 354 Benzintanks bzw. Kraftstoffkanister für Motorräder oder Kraftfahrzeuge bekannt sind, bei denen Fächer zur Aufnahme von Werkzeug usw. vorgesehen sind, wobei aber die Wandungen dieser Fächer mit der Wandung des Tanks oder Kanisters fest verbunden, bzw. sogar damit einstückig sind. Dies weicht prinzipiell vom Oberbegriff des Anspruches 1 ab. Nachteiligerweise muß somit bei jedem Transport des Kanisters zwecks Wiederauffüllen oder dergleichen das Werkzeugfach mit Inhalt mitgeschleppt werden. Beim Herstellen solcher Teile aus Kunststoff muß für den Kanister und das Werkzeugfach das gleiche Kunststoffmaterial eingesetzt werden, was aber oft nachteilig bzw. spritztechnisch sehr ungünstig ist. Auch ist Form und Größe des Fachs an Form und Größe des Kanisters gebunden, bzw. davon abhängig. Aus der Zeitschrift Europa-Sport, 1962, H.10, S.904, kennt man einen Kanister zur Aufnahme von Waschwasser mit im unteren Bereich angebrachtem Wasserhahn. An diesen Kanister kann von außen eine Tasche zur Aufnahme von Wasch- und Toilettenutensilien angehängt werden. Dies erfüllt nicht die Merkmale des Oberbegriffes des Anspruches 1. Außerdem ist hierbei nachteilig, daß eine Tasche nicht widerstandsfähig genug ist, um ihren Inhalt gegen Druckbeanspruchungen zu schützen. Darin untergebrachte Wasch- und Toilettenutensilien können sowohl während der Fahrt (Aufbewahrung im Kofferraum eines Autos), als auch beim meist rauhen Betrieb auf einem Campingplatz oder dergleichen beschädigt werden.

Demgegenüber wird die Aufgabe der Erfindung darin gesehen, einen Wasserkanister mit zugehörigem Behälter gemäß dem Oberbegriff des Anspruches 1 dahingehend auszubilden, daß bei geringen Herstellungskosten eine Kompakte und stabile Formgebung des Kanisters erreicht wird, wobei die Größe des getrennt vom Wasserkanister herstellbaren Behälters die Größe der Ausnehmung überschreiten kann.

Die Lösung dieser Aufgabe wird, ausgehend vom Oberbegriff des Anspruches 1, zunächst in den Merkmalen des Kennzeichens des Anspruches 1 gesehen. Der Wasserkanister besteht aus dem oberen, Handgriff und Wasserauslaß- bzw. -einfüllstutzen aufweisenden Bereich, der sich über die gesamte Breite des Kanisters erstreckt. Somit ist auch bei einem Kanister von relativ geringen Außenabmessungen genügend Platz für die Anbringung des Handgriffes und des Stutzens gegeben. Der darunter befindliche Bereich des Kanisters teilt sich auf in die Ausnehmung für den lösbaren Behälter und einen weiteren, Wasser aufnehmenden Bereich des Kanisters, der in den oberen Bereich einstückig übergeht, d.h. damit einen von unten nach oben durchgehenden Wasseraufnahmeraum bildet. Von der entsprechenden Seite her betrachtet bildet also der Kanister etwa die Form eines "L", wobei ein Schenkel des "L" vom oberen Bereich und der andere Schenkel vom vorgenannten unteren Bereich gebildet wird. Ein solcher Kanister ist mit relativ geringem Materialaufwand und Formkosten in sich stabil herstellbar, da als Vertiefungen ausgebildete Ausnehmungen wie beim erläuterten Stand der Technik oder ähnliche, nachteilige Formgebungen vermieden sind. Wasserkanister und Behälter sind sehr kompakt, d.h. ergeben eine sehr gute Raumausnutzung, wozu auch gegenüber vorbekannten runden Behältern ihre eckige Form mit beiträgt. Der Kanister kann für sich aus einem besonders geeigneten, nämlich elastischen Kunststoff hergestellt werden. Der aus einem anderen, seiner Funktion angepaßten, härteren Werkstoff herstellbare Behälter muß zwar in irgendeiner Weise eine lösbare Verbindung mit dem Kanister aufweisen; bzw. der Kanister muß entsprechende Verbindungsmittel tragen. Dies ist vom Prinzip her bekannt (siehe DE-GM 18 66 664 und 19 73 937). Form und Größe des Behälters kann im wesentlichen frei gewählt werden, da die Ausnehmung nur von den an sie angrenzenden Wänden der beiden Kanisterschenkel begrenzt wird, welche das obengenannte "L" bilden. Im übrigen kann aber der Behälter sowohl kleiner als auch größer als der Aufnahmeraum sein, der der erläuterten Ausnehmung entspricht. Es liegt damit auch im Bereich der Erfindung, zu einem Kanister nicht nur einen Behälter, sondern mehrere, unterschiedlich geformte und ausgestaltete Behälter vorzusehen und mitzuliefern (siehe Anspruch 14).

Eine bevorzugte Ausführungsform der Erfindung ist Gegenstand des Anspruches 2. Dies spart nicht nur für die Einheit aus Behälter und Kanister Raum, sondern ermöglicht einen besonders intensiven Halt und leichte Verbindungsmöglichkeit, z.B. mittels Steck- oder Rastverbindungen, zwischen Behälter und Kanisterwänden. Um evtl. beim Transport oder Lagerung Behinderungen durch seitlich über die Kanisterwandung vorragende Behälterteile zu vermeiden, empfiehlt sich hierzu die Ausgestaltung des Behälters gemäß Anspruch 3. Falls angestrebt wird, daß Behälter und Kanister zusammen die Außenabmessungen und Form eines konventionellen Kanisters haben, sind die Merkmale des Anspruches 4 vorgesehen.

Die Merkmale des Anspruches 5 ergeben den Vorteil, daß der Wasserkanister so auf eine Unterlage aufgestellt oder auch angehängt werden kann, daß sich der Wasserauslaß unten, d.h. an der tiefsten Stelle des Kanisters befindet, während der Behälter an der oberen Seite des Kanisters liegt und von daher leicht zugängig ist.

Ein weiteres, bevorzugtes Merkmal der Erfindung ist Gegenstand des Anspruches 10. Dieser Aufhängebügel ermöglicht es, bei Mitverwendung eines Personenkraftwagens, wie es insbesondere beim Camping der Fall ist, die Einheit aus Behälter und Kanister an der rückwärtigen Begrenzungswand des Kofferraumes anzuhängen, um sich bequem davorstehend waschen zu können.

Weitere Vorteile und Merkmale der Erfindung sind den weiteren Unteransprüchen, sowie der nachfolgenden Beschreibung und der zugehörigen Zeichnung von erfindungsgemäßen Ausführungsmöglichkeiten zu entnehmen. In der Zeichnung zeigt:

Fig. 1: einen Kanister nach der Erfindung in einer Frontansicht auf die hier breite Seitenfläche,

Fig. 2: eine Seitenansicht gemäß dem Pfeil II auf die hier schmale Seitenfläche des Kanisters,

Fig. 3: die Draufsicht auf Fig. 1, 2,

Fig. 4: eine Seitenansicht gemäß dem Pfeil IV in Fig. 1 auf die andere, hier schmale Seitenfläche,

Fig. 5: einen Kanister nach der Erfindung mit Behälter und an der rückwärtigen Wand eines Kofferraumes angehängt,

Fig. 6: einen Behälter nach der Erfindung in etwas vergrößertem Maßstab in der Seitenansicht,

Fig. 7: die Draufsicht zu Fig. 6 unter Weglassung des Deckels,

Fig. 8: eine Ansicht gemäß dem Pfeil VIII in Fig. 6 bei heruntergeklapptem Deckel,

Fig.9A in einem wiederum vergrößerten Maßstab Einzelbis 9F: heiten der Verbindungen zwischen den Bauteilen des Behälters und des Kanisters gemäß den in Fig. 1 eingezeichneten Kreisen A bis F,

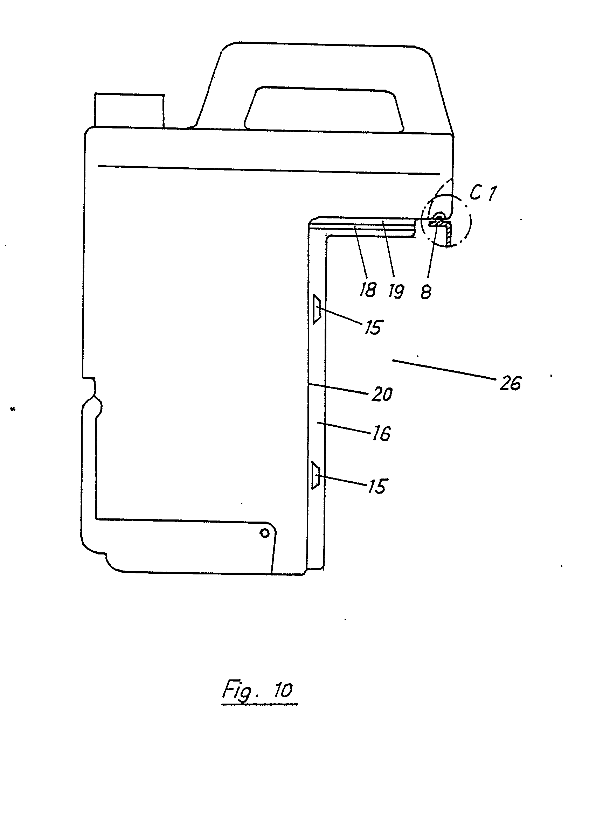

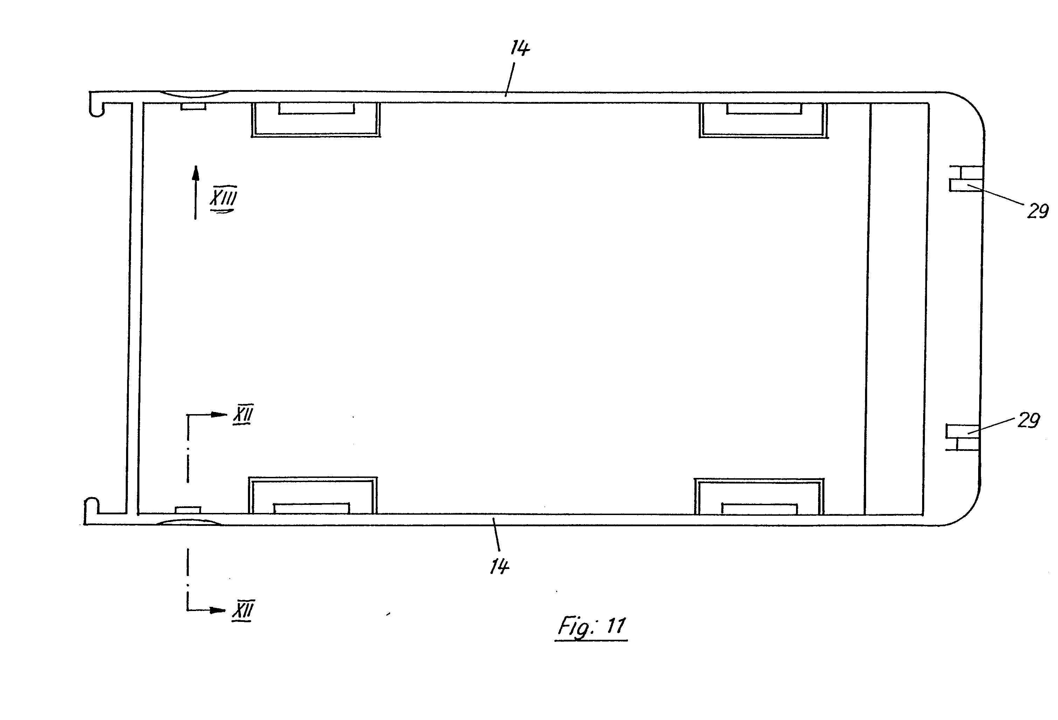

Fig.10: eine Ansicht gemäß Fig. 1, jedoch unter Fortlassung des Behälters,

Fig.11: in Draufsicht eine andere Ausführungsform des Behälters, ohne Deckel,

Fig.12: einen Schnitt gemäß der Linie XII - XII in Fig. 11 mit Deckel und zugehöriger Schnappverbindung zwischen Deckel und Behälter,

Fig.13: eine Teilansicht gemäß dem Pfeil XIII in Fig. 11.

Der Wasserkanister mit Behälter nach der Erfindung wird bevorzugt als sogenannter Reinigungsset bei Camping, Reise, Sport und Freizeit, insbesondere in Verbindung mit einem Kraftfahrzeug eingesetzt. Er besteht im Prinzip aus dem Kanister 1 und dem Behälter 2, wobei am Kanister 1 ein Handgriff 3 und ein Wassereinfüllstutzen 4 vorgesehen sind. Ferner kann am Kanister 1 ein Aufhängebügel 5 gelenkig ausschwenkbar angebracht sein. Im Kanister wird Waschwasser aufbewahrt, während der Behälter 2 alle möglichen Utensilien, einschließlich Reinigungsmittel wie Seife und Handtuch, aber auch andere Teile, wie z.B. Werkzeuge o.ä. aufnehmen kann. Die Behältnisse für Wasser einerseits und Reinigungsmittel usw. andererseits sind also getrennte Bauteile, trotzdem aber in einer Einheit zusammenfaßbar, wobei nach Bedarf der Behälter 2 vom Kanister 1 gelöst werden kann. Der Benutzer ist bei den angegebenen Einsatzgebieten unabhängig von stationären Wasserstellen und auch unabhängig von auf Campingplätzen und dergleichen vorgesehenen Waschstellen, die erfahrungsgemäß oft wegen Überfüllung nicht benutzbar sind.

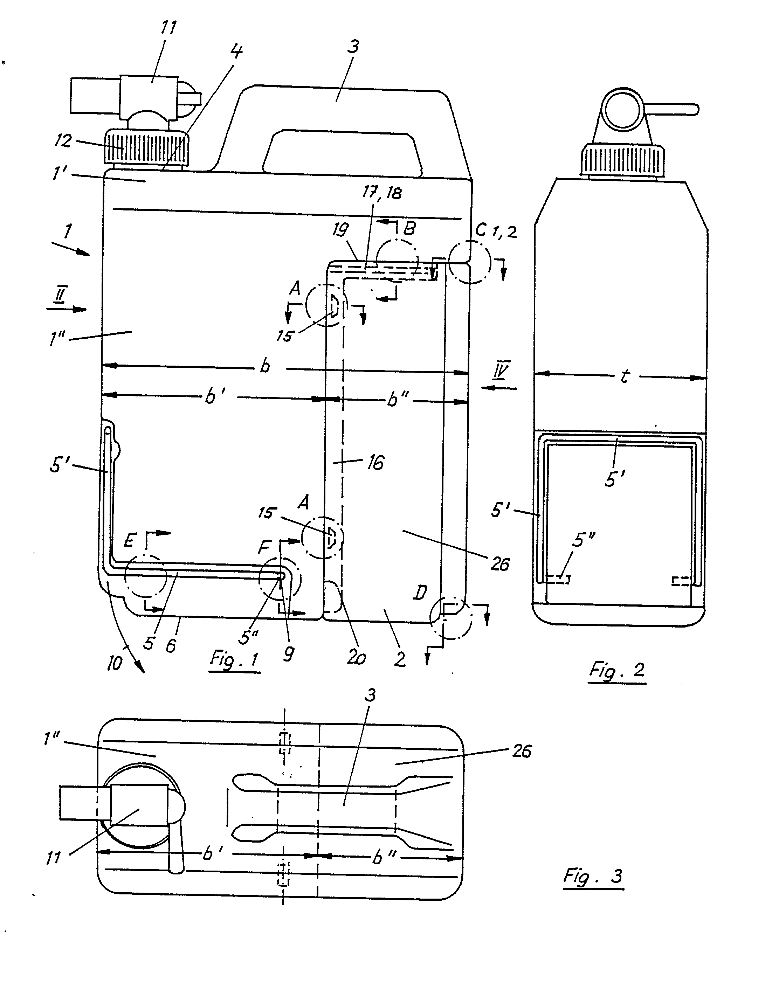

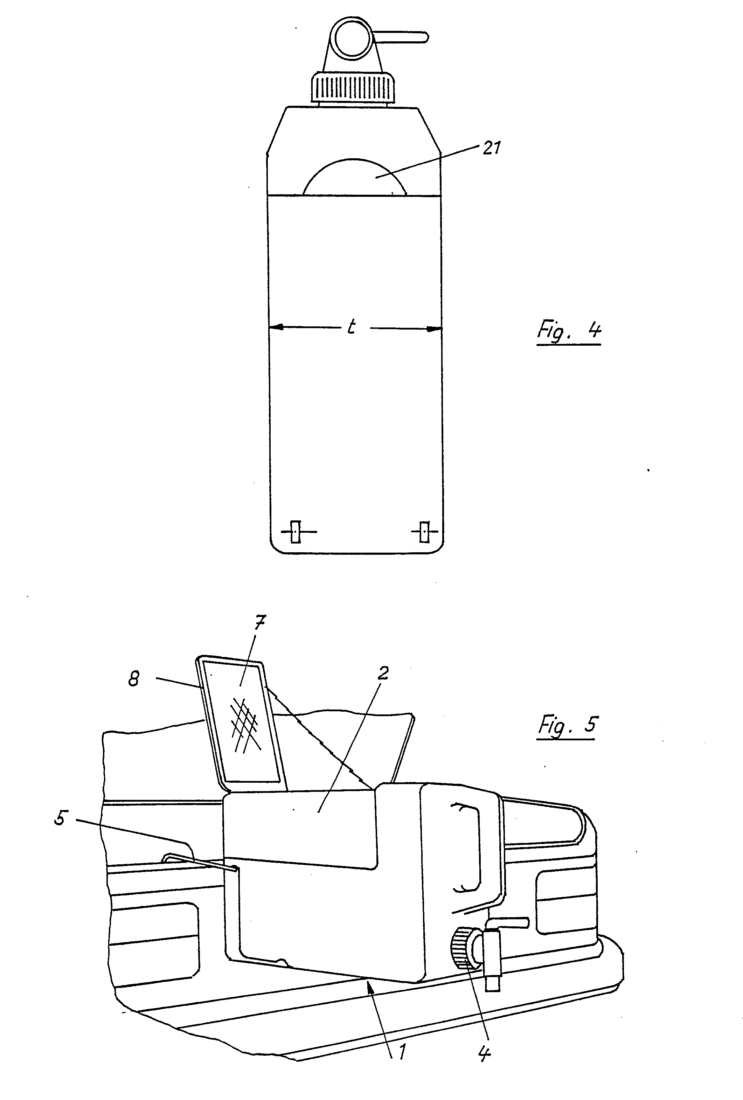

Der Wasserkanister 1 besteht aus einem oberen Bereich 1', der sich über die gesamte Kanisterbreite b erstreckt und damit genügend Platz für die Unterbringung von Handgriff 3 und Wasserauslaßstutzen 4 bietet. Ferner wird damit auch die Last des unteren Behälterbereiches 1" über den oberen Bereich 1' vom Handgriff 3 aufgenommen. Einseitig (bezogen auf die Darstellung in Fig. 1) ist unter dem oberen Bereich 1' der Wasserkanister über seine gesamte Tiefe t(siehe Fig. 2 und 4) von seiner Gesamtbreite b auf die Teilbreite b' des unteren Bereiches 1" reduziert, so daß dort eine Ausnehmung 26 von den Abmessungen:"Breite b" x Tiefe t x Höhe h" geschaffen wird. Der Wasserkanister hat damit im Prinzip die Form eines "L", wobei das Innere des unteren Kanisterbereiches 1" in das Innere des oberen Kanisterbereiches 1' übergeht. Da die Ausnehmung 26 und damit der hierdurch geschaffene Aufnahmeraum sich bis zum Boden 6 des unteren Kanisterbereiches 1" erstreckt, ist sie seitlich nur von den Wänden 19 und 20 des Kanisters begrenzt; jedoch an den übrigen Seiten frei zugänglich. Dies erlaubt nicht nur ein ungehindertes Anbringen und Wiederablösen des Behälters 2 am bzw. vom Kanister, sondern auch die erläuterte Möglichkeit, daß die Abmessungen des Behälters 2 von denen des Aufnahmeraums abweichen, insbesondere demgegenüber auch größer sein können.

Im vorliegenden Ausführungsbeispiel entsprechen die Abmessungen des Behälters 2 in etwa denen (b" x t x h) der erläuterten Ausnehmung 26 und liegen bündig an den Wänden 19, 20 an. Dies ist zwar eine bevorzugte Ausführungsform der Erfindung, da sie eine kompakte Bauweise der Einheit aus Kanister und Behälter ergibt, doch ist die Erfindung hierauf nicht beschränkt.

Insbesondere Fig. 5 zeigt eine weitere vorteilhafte Ausgestaltung der Erfindung, nämlich die Anordnung des Aufnahmeraumes für den Behälter 2 auf der einen, in dieser Figur oben liegenden Seite und des Wasserauslaßstutzens 4 auf bzw. im Bereich der anderen, hier unten liegenden Seite der Einheit aus Kanister und Behälter. An einem hochklappbaren Deckel 8 des Behälters kann innenseitig ein Spiegel 7 vorgesehen sein. In dem offenen Behälter befinden sich die Waschutensilien. Damit kann der mit dem Gesicht zum Kraftfahrzeug stehende Benutzer sich sehr bequem waschen, da er Wasserauslaß, Waschutensilien und Spiegel in nahezu gewohnter Anordnung einer Hausinstallation vor sich hat. Für das Anhängen des Kanisters mit Behälter an die Rückwand eines Kofferraumes gemäß Fig. 5 ist der um die Schwenkachse 9 in Pfeilrichtung 10 ausschwenkbare Bügel 5 mit einem abgewinkelten Ende 5' vorgesehen, das in der Haltelage an der Innenseite der rückwärtigen Kofferraumwand anliegt. Der Bügel 5 mit Abwinkelung 5' ist so am Kanister angeordnet und die Abwinkelung ist so gebogen, daß in der aufgehängten Lage des Kanisters mit Behälter gemäß Fig. 5 sich der Behälter 2 an der oben gelegenen Seite des Kanisters befindet, während der Wasserauslaßstutzen 4 im unteren Bereich des Kanisters gelegen ist, so daß der Behälter leicht zugängig ist, sowie praktisch das gesamte im Kanister befindliche Wasser entnommen werden kann.

Auf den Wasserauslaß- und -einfüllstutzen 4 ist bevorzugt ein verschließbarer Hahn 11 aufgeschraubt, der für Transportzwecke in eine Stellung schwenkbar sein kann, in der er nicht nach außen übersteht. Außerdem kann in ihm eine in das Kanisterinnere hineinragende, in der Zeichnung nicht dargestellte Belüftung vorgesehen sein. Der Hahn 11 bildet mit seiner Schraubkappe zusammen zugleich den Verschluß des Stutzens 4.

Der Kanister mit seinen beiden Bereichen 1' und 1", dem Handgriff 3 und dem Stutzen 4 mit Schraubgewinde besteht aus Kunststoff und wird bevorzugt aus einem Kunststoff geblasen, beispielsweise aus PE oder PP. Das gleiche gilt für die nachstehend noch zu erläuternden Steck- und Schnappverbindungen des Kanisters.

Der Behälter 2 mit Deckel 8 wird ebenfalls aus Kunststoff hergestellt, bevorzugt gespritzt. Als Kunststoffmaterialien können hierzu dienen: ABS, PS, PE oder PP. Auch an ihnen sind die noch zu erläuternden, möglichen Rast- oder Schnappverbindungen mitgespritzt. Der Wasserhahn 11 ist ebenfalls aus Kunststoff hergestellt, bevorzugt gespritzt, z.B. aus PE. Der Bügel 5, 5' kann ein mit Kunststoff beschichteter Stahlbügel sein. Die getrennte Herstellung der vorstehend erläuterten vier Bauteile, nämlich Kanister, Behälter, Wasserhahn und Bügel und deren anschließende Montage ist fertigungstechnisch wesentlich billiger, als wenn man zwei oder mehrere dieser Teile zusammen, d.h. in einem Stück herstellen würde.

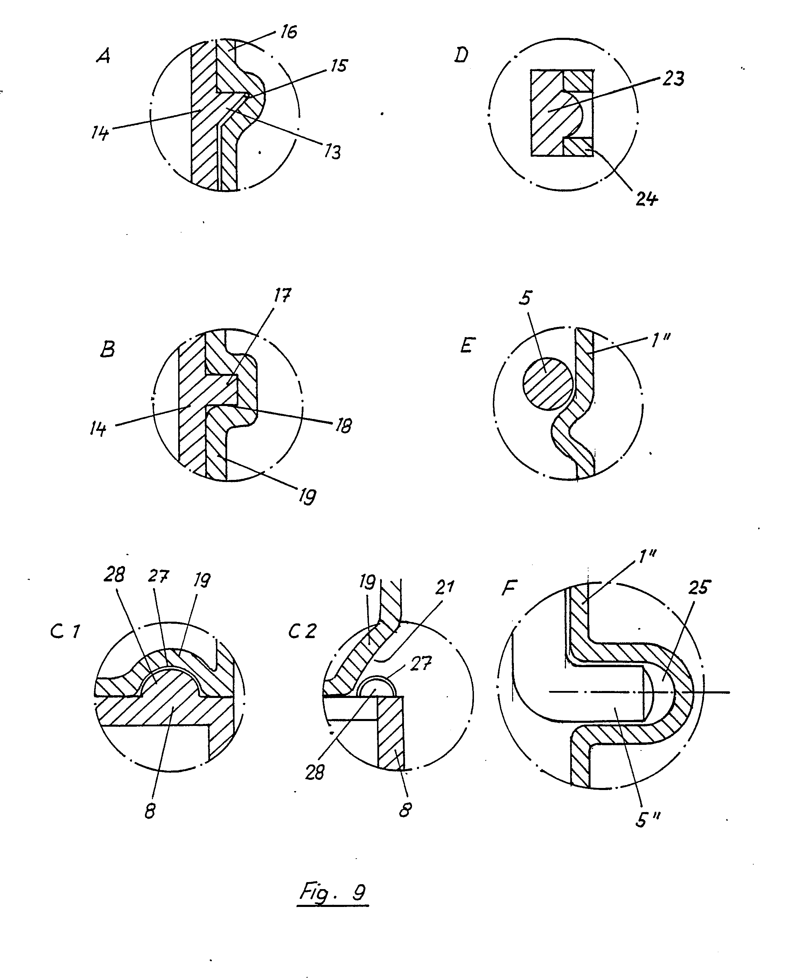

Behälter und Kanister sind durch Steck-, Schraub- oder Schnappverbindungen miteinander verbindbar und ebenso leicht wieder voneinander zu lösen. Entsprechende Ausführungsmöglichkeiten sind im vergrößerten Maßstab der Fig. 9 zu entnehmen, wobei die eingekreisten Details zu den entsprechend markierten Stellen der Fig. 1 gehören. Im einzelnen ist zu sagen:

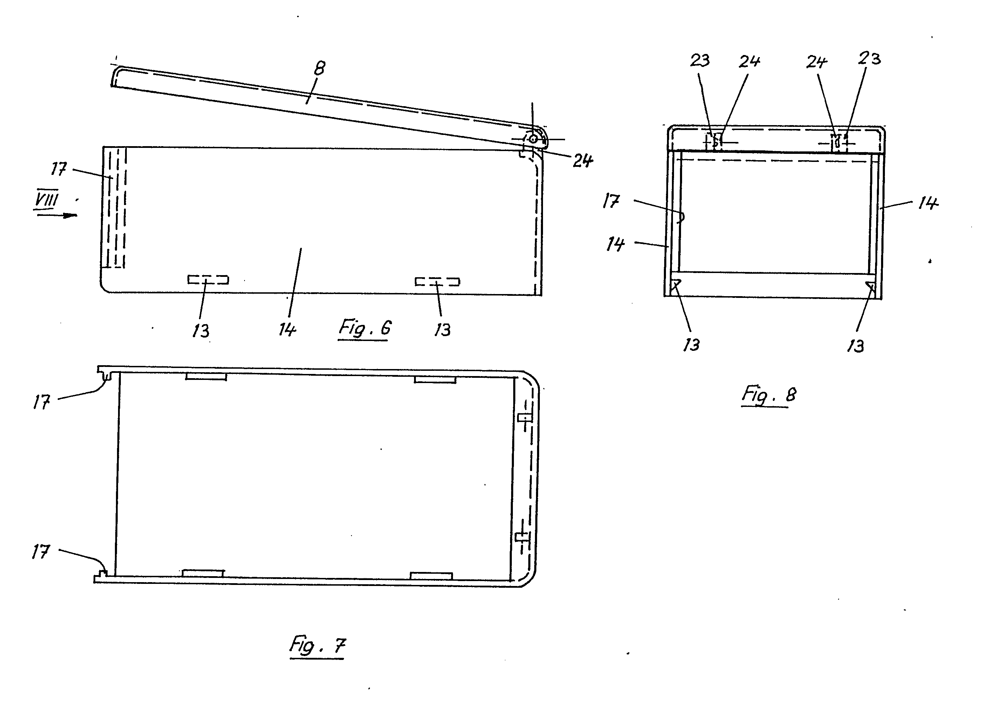

Fig. 9A zeigt das Einrasten von angeschrägten Nasen 13, die am unteren Bereich der seitlichen Behälterwandung 14 vorgesehen sind (siehe auch Fig. 6 bis 8), in entsprechende Aussparungen 15, die sich an die Wand 20 umgebenden Randleisten 16 des Kanisters befinden.

Fig. 9B zeigt in der Lage gemäß Fig. 5, 6 bis 8, senkrecht verlaufende Steckleisten 17 der Behälterwandung 14 (siehe wiederum Fig. 6 bis 8), die in nutförmige Ausnehmungen 18 der Kanisterwand 19 bzw. dort vorgesehener Leisten einschiebbar sind. Der Behälter wird also mit seinen Steckleisten 17 in die Nuten 18 so weit eingeschoben (in Fig. 1 von rechts nach links), bis die Nasen 13 in die Aussparungen 15 der Kanisterwandung 16 einrasten.

Fig. 9C1 zeigt eine Schnappverbindung 27, 28 zwischen Deckel 8 und Wand 19 des Kanisters, die dort diese Teile lösbar zusammenhält.

Fig. 9C2 zeigt eine Griffmulde 21 in der Wandung 19 des Kanisters zum Untergreifen und Öffnen des Deckels 8, wobei die vorgenannte Schnappverbindung 27, 28 gelöst wird. Diese Griffmulde ist auch in Fig. 4 zu erkennen.

Fig. 9D zeigt im Schnitt in zusammengeschnappter Lage Behälterscharnierteile 24 und das entsprechende Deckelscharnierteil 23 (siehe auch Ansicht gemäß Fig. 8).

In Fig. 9E ist eine Verriegelung zwischen dem Bügel 5 und einer Wandung des unteren Kanisterbereiches 1″ dargestellt.

Fig. 9F zeigt eine Abwinkelung 5″ des Bügels 5, die in eine Aussparung 25 der Wandung des unteren Kanisterbereiches eingerastet ist. Eine entsprechende Abwinkelung 5″ mit Aussparung 25 befindet sich auch auf der anderen Seite des Kanisters.

Der Behälter kann in sich noch Versteifungen, Verstrebungen oder Abtrennwände aufweisen, die in der Zeichnung nicht dargestellt sind.

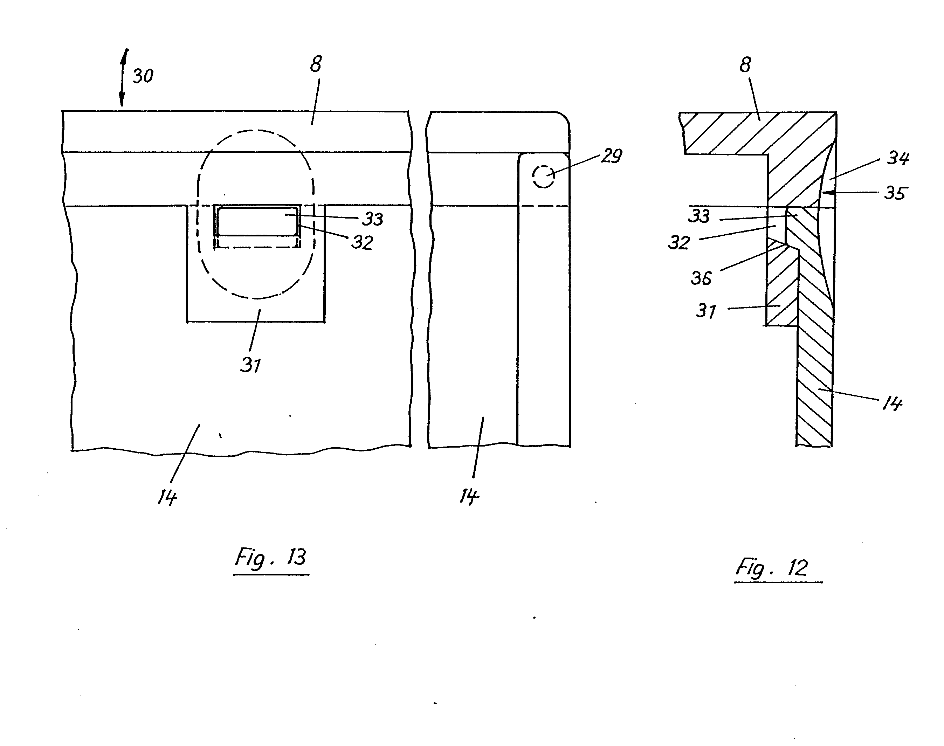

Das Ausführungsbeispiel der Fig. 11 bis 13 zeigt eine weitere Möglichkeit des lösbaren Haltens des Deckels in der Schließlage am Behälter. Die Behälterwandung ist wieder mit 14 und der Deckel mit 8 beziffert. Sie sind bei 29 gelenkig miteinander verbunden, so daß der Deckel auch hier in Richtung der Pfeile 30 aus-, bzw. eingeschwenkt werden kann. In der in den Fig. 12, 13 dargestellten Schließlage schnappen nach unten ragende Ansätze 31, die beiderseits am Deckel angebracht sind, mit ihren Öffnungen 32 über nach innen ragende Vorsprünge 33 der Innenseite der Behälterwandung 14. Um dies zu ermöglichen, besteht der Deckel 8 aus einem elastisch verformbaren Material, im vorliegenden Ausführungsbeispiel einem entsprechenden Kunststoff. Um diese Schnapphalterung zu lösen, muß lediglich mit Hilfe der Griffmulde 34 auf die elastische Deckelwandung eine Druckkraft 35 ausgeübt werden, worauf der Deckel 8 (auch mit Hilfe der Griffmulde 34) nach oben abgezogen werden kann. Dies wird durch die entsprechende Schräglage der Berührungsfläche 36 zwischen den Teilen 31 und 33 erleichtert.

Alle dargestellten und beschriebenen Merkmale, sowie ihre Kombinationen untereinander, sind erfindungswesentlich.

## Ansprüche

1. Wasserkanister und zugehöriger Behälter zum Einsatz bzw. Verwendung beim Camping, bei Reisen, bei Sport und dergleichen, insbesondere bei Mitverwendung eines Kraftwagens, wobei der Wasserkanister an seinem beim Tragen oberen, sich über seine gesamte Breite erstreckenden Bereich einen Handgriff und einen absperrbaren Wasserauslaß besitzt, wobei ferner eine beim Tragen des Kanisters sich unterhalb dieses oberen Bereiches befindliche Ausnehmung für den lösbar darin einsetzbaren und haltbaren Behälter vorgesehen ist, dadurch gekennzeichnet, daß zur Schaffung der Ausnehmung (26) der Wasserkanister (1) über seine gesamte Tiefe (t) unterhalb seines oberen Bereiches (1′) in seiner Breite (b) reduziert (b′) ist, wobei diese Reduzierung der Breite sich bis hinunter zum Boden (6) des Kanisters erstreckt, so daß der obere Bereich (1′) und der verbleibende untere Bereich (1″) des Wasserkanisters miteinander einen Winkel oder ein "L" bilden, wobei das Innere der beiden vorgenannten Bereiche einstückig ineinander übergeht und daß ein mittels eines Deckels (8) oder dergleichen abschließbarer Behälter (2) der Art vorgesehen ist, daß er in die vorgenannte Ausnehmung einsetzbar ist.

2. Wasserkanister mit Behälter nach Anspruch 1, dadurch gekennzeichnet, daß der Behälter (2) in die Ausnehmung (26) bündig an deren Begrenzungswänden (19, 20) anliegend, paßt.

3. Wasserkanister mit Behälter nach Anspruch 1 oder 2, dadurch gekennzeichnet, daß die Breite des Behälters (2) gleich der Tiefe (t) der Ausnehmung ist.

4. Wasserkanister mit Behälter nach Anspruch 2 und 3, dadurch gekennzeichnet, daß die Abmessungen des Behälters gleich oder annähernd gleich denen (b″ x t x 1) der Ausnehmung (26) sind.

5. Wasserkanister mit Behälter nach einem der Ansprüche 1 bis 4, dadurch gekennzeichnet, daß die Ausnehmung (26) und der Wasserauslaß (4, 11) sich an einander entgegengesetzt liegenden Seiten des Wasserkanisters (1) befinden.

6. Wasserkanister mit Behälter nach einem der Ansprüche 1 bis 5, dadurch gekennzeichnet, daß der Wasserauslaß mit einem Hahn (4) versehen ist.

7. Wasserkanister mit Behälter nach Anspruch 6, dadurch gekennzeichnet, daß der Wasserhahn (11) verschwenkbar ist.

8. Wasserkanister mit Behälter nach Anspruch 6 oder 7, dadurch gekennzeichnet, daß vom Wasserhahn (11) in das Kanisterinnere ein Belüftungsrohr führt.

9. Wasserkanister mit Behälter nach einem der Ansprüche 1 bis 8, dadurch gekennzeichnet, daß am Wasserkanister (1) ein ausschwenkbarer Aufhängebügel (5) angebracht ist.

10. Wasserkanister mit Behälter nach Anspruch 9, dadurch gekennzeichnet, daß der Aufhängebügel (5) in der Nähe des Bodens (6) des unteren Bereiches (1″) des Wasserkanisters angelenkt und davon wegschwenkbar ist, daß am Ende des Aufhängebügels (5) sich eine Abwinkelung (5′) befindet, wobei der Abstand zwischen der Abwinkelung und dem Boden bei ausgeschwenktem Bügel etwa der Dicke der rückwärtigen Wand des Kofferraumes eines PKW entspricht.

11. Wasserkanister mit Behälter nach Anspruch 9 oder 10, dadurch gekennzeichnet, daß der Aufhängebügel (5) an der der Ausnehmung (26) abgewandten Seite des Kanisters angelenkt ist und daß die Abwinkelung (5′) des Aufhängebügels so verläuft, daß bei mittels des Bügels (5) aufgehängtem Kanister der Behälter sich an der oben gelegenen Kanisterseite und der Wasserauslaß (4) im unten gelegenen Bereich des Kanisters befindet.

12. Wasserkanister mit Behälter nach einem der Ansprüche 1 bis 11, dadurch gekennzeichnet, daß der Deckel (8) des Behälters mit einem Spiegel (7) verbunden ist.

13. Wasserkanister mit Behälter nach einem der Ansprüche 1 bis 12, dadurch gekennzeichnet, daß im Behälter Versteifungsrippen und gegebenenfalls Trennwände vorgesehen sind.

14. Wasserkanister mit Behälter nach einem der Ansprüche 1 bis 13, dadurch gekennzeichnet, daß am Behälter (2) sowie an den Begrenzungswänden (19, 20) der Aus nehmung des Wasserkanisters miteinander korrespondierende Verbindungen wie Steck- und/oder Schnappverbindungen vorgesehen sind.

15. Wasserkanister mit Behälter nach einem der Ansprüche 1 bis 14, dadurch gekennzeichnet, daß der Deckel (8) des Behälters (2) an diesem ausschwenkbar angelenkt und ferner am Behälter in der Schließlage durch eine lösbare Schnapp- oder Rastverbindung fest gehalten ist.

16. Wasserkanister mit Behälter nach Anspruch 15, dadurch gekennzeichnet, daß die Behälterwandung (14) innenseitig Vorsprünge (33) und der Deckel (8) in der Schließlage damit korrespondierende und über diese Rastvorsprünge - schnappende Öffnungen (32) aufweist, wobei der Deckel aus einem elastisch verformbaren Material besteht.

17. Wasserkanister mit Behälter nach einem der Ansprüche 1 bis 16, dadurch gekennzeichnet, daß zu einem Wasserkanister (1) mehrere Behälter passend, jedoch mit unterschiedlichen Abmessungen vorgesehen sind.

Fig. 1

Fig. 2

Fig. 3

Fig. 4

Fig. 5

*Fig. 6*

*Fig. 7*

*Fig. 8*

EP 0 294 671 A2

Fig. 9

C 1

18 19 8

15

26

20

16

15

Fig. 10

*Fig: 11*

EP 0 294 671 A2

Fig. 12

Fig. 13